# EUROPÄISCHE PATENTSCHRIFT

(11) **EP 1 629 586 B1**
(45) Veröffentlichungstag und Bekanntmachung des Hinweises auf die Patenterteilung: **07.01.2009**
(21) Anmeldenummer: 04729429.3
(22) Anmeldetag: 26.04.2004
(51) Int. Cl.: H02K 1/28

(54) **ROLLEN UND ROLLENMOTOREN**
ROLLERS AND ROLLER MOTORS
ROULEAUX ET MOTEURS POUR ROULEAUX

(30) Priorität: 30.05.2003 DE 10324664
(43) Veröffentlichungstag der Anmeldung: 01.03.2006
(60) Teilanmeldung: 07013100.8
(73) Patentinhaber: SIEMENS AKTIENGESELLSCHAFT, 80333 München (DE)
(72) Erfinder: BOTT, Erich, 97618 Hollstadt (DE); OESTREICH, Markus, 36110 Schlitz (DE); PLATEN, Markus, 97616 Bad Neustadt (DE); RÄDER, Sebastian, 97654 Bastheim (DE); VOLLMER, Rolf, 36129 Gersfeld (DE)
(86) Internationale Anmeldenummer: PCT/EP2004/004399
(87) Internationale Veröffentlichungsnummer: WO 2004/107531

(56) Entgegenhaltungen:
- EP-A- 0 618 165
- EP-A- 1 107 443
- WO-A-01/52386
- DE-A- 3 230 731
- DE-C- 645 238
- FR-A- 2 650 712
- US-A- 4 574 210
- US-A- 4 665 333
- US-A- 5 147 020
- US-A- 5 442 248
- US-A- 6 035 999
- US-B1- 6 455 960
- PATENT ABSTRACTS OF JAPAN Bd. 016, Nr. 116 (E-1181), 24. März 1992 (1992-03-24) -& JP 03 285546 A (NIPPON DENSAN CORP), 16. Dezember 1991 (1991-12-16)

## Beschreibung

Die vorliegende Erfindung betrifft einen Rollenmotor. Die vorliegende Erfindung betrifft ferner ein Verfahren zum Herstellen von Rollenmotoren.

Bei Servoaußenläufermotoren mit kleinem Bohrungsdurchmesser müssen häufig verhältnismäßig teure, geschliffene Magnetringe für den Läufer eingesetzt werden. Des Weiteren stellt es ein Problem dar, Magnetringe mit der notwendigen Genauigkeit koaxial mit einem Rückschlussrohr auszurichten und darin zu befestigen.

Die in der Vergangenheit eingesetzten Motoren besaßen häufig nur eine geringere Polzahl. Daher war es ohne weiteres möglich, Läuferringe mit einer der Polzahl entsprechenden Anzahl von Einzelsegmenten ohne hohen Montageaufwand zusammenzusetzen. Darüber hinaus waren in der Vergangenheit üblicherweise geringere Energiedichten der eingesetzten Dauermagnete ausreichend. Demgegenüber fordern moderne, hochpolige Motoren hohe Energiedichten und kleine Pollücken. Dies wird mit einteiligen Dauermagneten aus Kostengründen kaum realisiert. Der Einsatz von Einzelsegmenten anstelle eines einteiligen Ringmagnets oder einiger weniger Einzelsegmente, die ebenfalls geschliffen werden müssten, gewährleistet zwar hohe Energiedichten und geringe Pollücken, aber der Montageaufwand ist relativ hoch.

Die WO 01/52386 A2 zeigt einen Außenläufermotor gemäß dem Oberbegriff des Patentanspruchs 1.

Die JP 3285546 A zeigt einen Motor mit einem Außenläufer gemäß den Oberbegriffen der Patentansprüche 1 und 7.

Die Aufgabe der vorliegenden Erfindung besteht somit darin, einen Rollenmotor vorzuschlagen, welcher den Anforderungen an geringen Montageaufwand Genüge leistet.

Die Aufgabe wird durch die Merkmale der Patentansprüche 1 und 7 gelöst. Vorteilhafte Weiterbildungen sind den Unteransprüchen zu entnehmen.

Erfindungsgemäß wird die Aufgabe gelöst durch einen Rollenmotor mit einem Außenläufer, der eine Vielzahl von Einzelmagneten aufweist, die am Innenumfang eines Rückschlussrohrs angeordnet sind, und einer Trägereinrichtung, die zumindest teilweise radial innerhalb der Einzelmagnete angeordnet ist und die radial nach außen weisende, axial verlaufende Abstandshalter zum Beabstanden der Einzelmagnete in Umfangsrichtung aufweist.

Entsprechend ist vorgesehen ein Verfahren zum Herstellen eines Rollenmotors oder Außenläufermotors durch Bereitstellen einer rohrförmigen Trägereinrichtung mit radial nach außen weisenden, axial verlaufenden Abstandshaltern, Fixieren einer Vielzahl von Einzelmagneten oder Magnetrohlingen am Außenumfang der Trägereinrichtung, jeweils einen Einzelmagneten oder Magnetrohling zwischen zwei Abstandshaltern, Einschieben und Fixieren der Trägereinrichtung mit den Einzelmagneten oder Magnetrohlingen in einem Rückschlussrohr.

Die erfindungsgemäße Trägereinrichtung kann bei Rollenmotoren eingesetzt werden, bei denen ein Pol mit mehreren Einzelmagneten anstelle eines rundgeschliffenen Polsegments, das sehr teuer in der Herstellung ist, eingesetzt werden. Darüber hinaus kann die erfindungsgemäße Trägereinrichtung auch bei sehr hochpoligen Rollenmotoren beziehungsweise Außenläufermotoren eingesetzt werden, wobei für jeden Pol ein Einzelmagnet eingesetzt wird. In beiden Fällen bildet die Trägereinrichtung am günstigsten im Wesentlichen ein Rohr oder eine Hülse, auf die die Einzelmagnete von außen aufgebracht werden können.

Nach dem Einbau in das Rückschlussrohr wird die Trägereinrichtung ausgedreht, so dass im Wesentlichen nur die Abstandshalter zwischen den Einzelmagneten oder den Magnetrohlingen bestehen bleiben. Damit kann der Abstand zwischen Stator und Rotor auf ein Minimum reduziert werden. Die Abstandshalter, die die Einzelmagnete vor und nach dem Fixieren im Rückschlussrohr axial ausrichten, bleiben bestehen.

Die Trägereinrichtung kann aus einem günstig herzustellenden Kunststoffmaterial bestehen. Ferner kann sie Klebebetten besitzen, in denen Klebstoff die Einzelmagnete an die Trägereinrichtung fixiert. Auf diese Weise kann die Trägereinrichtung mit den Einzelmagneten auf einfache Weise in ein Rückschlussrohr eingeschoben werden.

Die Trägereinrichtung kann durch einen Spreizdorn an das Rückschlussrohr angepresst und verklebt werden. Damit die Trägereinrichtung günstigere Dehnungseigenschaften besitzt, kann das Rohr der Trägereinrichtung in einem oder mehreren Abschnitten eine verminderte Wandstärke besitzen.

Falls nicht vorgefertigte Einzelmagnete bei der Herstellung des Außenläufers verwendet werden, können die Magnetrohlinge nach dem Montieren beziehungsweise Fixieren in dem Rückschlussrohr magnetisiert werden.

Vorzugsweise wird der Rollenmotor als Oberwellenmotor ausgestaltet. Dieser hat den Vorteil, dass das tatsächlich auftretende Feld des Stators besser ausgenutzt werden kann.

Zur Ansteuerung des Rollenmotors ist es häufig notwendig, die Rotorlage oder Rotorgeschwindigkeit zu ermitteln. Diese können indirekt über eine im Rollenmotor abgegriffene EMK (elektromotorische Kraft) gewonnen werden.

In einer speziellen Ausgestaltung des Rollenmotors können dessen Nutverschlüsse durch radial eingebrachtes Rundmaterial realisiert werden.

Generell kann die vorliegende Erfindung für jede Art von Außenläufermotoren, insbesondere auch Oberwellenmotoren, verwendet werden. Eine Beschränkung auf Rollenmotoren besteht nicht.

Die vorliegende Erfindung wird nun anhand der beigefügten Zeichnungen näher erläutert, in denen zeigen:
- FIG 1: einen Querschnitt durch eine erfindungsgemäße Trägereinrichtung;
- FIG 2: eine Trägereinrichtung gemäß FIG 1 mit eingesetzten Einzelmagneten;
- FIG 3: eine Anordnung gemäß FIG 2 mit aufgesetztem Rückschlussrohr;
- FIG 4: eine Anordnung gemäß FIG 3 mit ausgedrehter Trägereinrichtung;
- FIG 5: einen Querschnitt durch einen Oberwellen-Außenläufermotor; und
- FIG 6: einen Querschnitt durch einen Stator mit speziellem Nutverschluss.

Die nachfolgend näher beschriebenen Ausführungsformen stellen bevorzugte Ausführungsbeispiele der vorliegenden Erfindung dar.

Die Herstellungskosten eines geschliffenen Magnetrings sind, wie oben bereits erwähnt, verhältnismäßig hoch. Daher werden die Magnetringe vielfach durch eine Vielzahl von Einzelmagneten ersetzt. Hierbei bestehen jedoch Probleme, diese Vielzahl von Einzelmagneten oder unmagnetisierten Magnetrohlingen für einen Außenläufermotor in ein Rückschlussrohr zu montieren. Insbesondere bestehen Probleme, die axiale Ausrichtung der Einzelmagnete während der Montage aufrechtzuerhalten. Daher erfolgt die Magnetisierung vielfach erst nach der Montage ins Rückschlussrohr. Ist jedoch die Dicke des Rückschlussrohrs zu groß, der Durchmesser der Anordnung zu klein oder die Polzahl des Außenläufers zu hoch, so ist eine nachträglich Magnetisierung in der Regel nicht möglich.

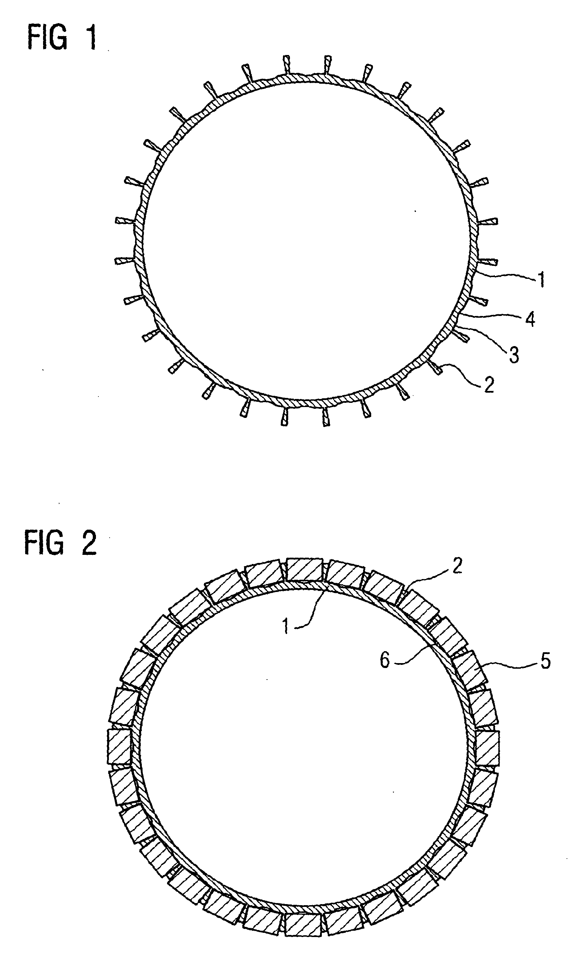

Aus diesen Gründen wird zur Montage eines Außenläufers erfindungsgemäß die in FIG 1 dargestellte Trägereinrichtung eingesetzt. Sie besteht vorzugsweise aus einem Kunststoff. Die Trägereinrichtung besteht im Wesentlichen aus einer rohrförmigen Trägerhülse 1. Diese weist eine Vielzahl radial nach außen stehender, sich axial als Rippen erstreckender Abstandshalter 2 auf. Zwischen zwei Abstandshaltern 2 wird jeweils ein Einzelmagnet auf Auflageflächen 3 aufgebracht. Um die Einzelmagnete zu fixieren sind Klebebetten 4 vorgesehen, in die Klebstoff eingebracht werden kann.

FIG 2 zeigt nun im Querschnitt eine Trägereinrichtung, in die von außen Einzelmagnete 5 eingesetzt sind. Sie sind jeweils mit Klebstoff 6 fixiert und durch die Abstandshalter 2 in axialer Richtung zueinander ausgerichtet. Die Abstandshalter 2 in den Pollücken dienen auch zur Schaffung von Kapillarspalten, die das Verteilen des Klebstoffs 6 beziehungsweise einer Vergussmasse begünstigen. Zur Montage ist damit lediglich ein Klebedepot auf der Trägerhülse 1 bereitzustellen.

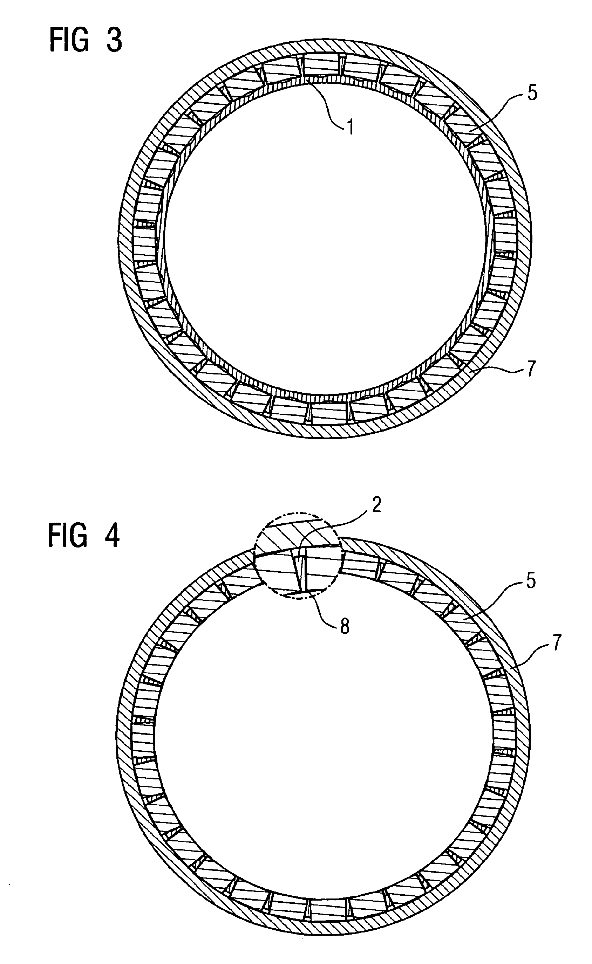

Der Querschnitt von FIG 3 zeigt den Zustand, in dem die Anordnung von FIG 2 in ein Rückschlussrohr 7 eingebaut ist. Die Anordnung aus der Trägerhülse 1 und den Einzelmagneten 5 wird in dem Rückschlussrohr 7 vergossen. Auch hierzu sind die Abstandshalter 2 so dimensioniert, dass für das Ausgießen beziehungsweise Einkleben in das Rückschlussrohr 7 entsprechend geeignete Kapillarkräfte auftreten.

Um den in FIG 2 dargestellten vorgefertigten Ring an das Rückschlussrohr 7 anzupressen, wird ein Spreizdorn verwendet, der in die Trägerhülse 1 eingeführt wird. Damit kann der toleranzbedingte Luftspalt zum Rückschlussrohr 7 auf ein Minimum reduziert werden. Dabei ist es günstig, wenn die Trägerhülse 1 genügend elastisch gestaltet ist. Dies kann durch eine geeignete Kunststoffauswahl oder beispielsweise durch eine partiell verminderte Wandstärke der Trägerhülse erreicht werden.

Als letzter Fertigungsschritt für den Außenläufer, der in FIG **4** im Querschnitt dargestellt ist, wird die Trägerhülse 1 aus dem in FIG 3 dargestellten Läufergebilde bis an die Dauermagnete 5 ausgedreht. Dadurch wird ein kleiner Luftspalt zwischen Läufer und Ständer mit erforderlicher Genauigkeit realisiert. Da die Einzelmagnete 5 rechteckförmigen Querschnitt besitzen, bleibt an der Läuferinnenwand jeweils zwischen zwei Einzelmagneten 5 ein Restträgerabschnitt 8 bestehen. Im Wesentlichen sind die Einzelmagnete 5 an der Läuferinnenwand jedoch frei gedreht.

Durch die Trägerhülse als sogenanntes "teilweise verlorenes Hilfsmittel" wird die technisch nur mit hohem Aufwand beherrschbare Einbringung von Magneten in ein Rohr auf ein leicht automatisierbares, radiales Aufbringen der Einzelmagnete von außen zurückgeführt.

In den oben genannten Ausführungsformen kann der Rollenmotor durch einen Oberwellenmotor, der die Oberwellen des Luftspaltfelds ausnützt, realisiert werden. Damit wird es möglich, kleine Motoren hochpolig aufzubauen. Durch den hochpoligen Aufbau benötigt der Motor weniger Eisen und es kann mehr Kupfer eingebracht werden, so dass die Stromwärmeverluste reduziert werden.

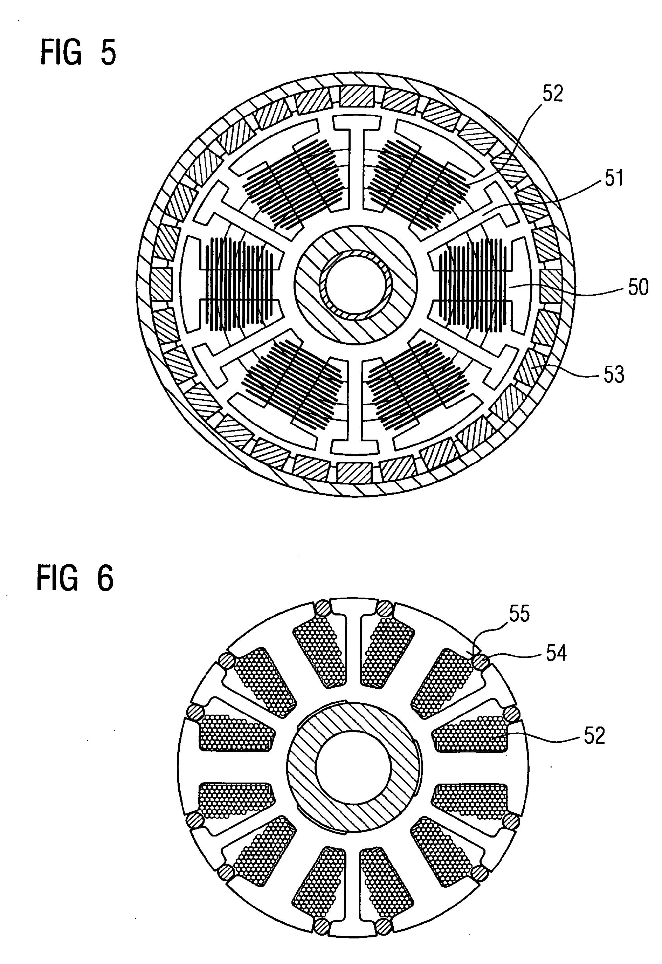

In FIG **5** ist ein derartiger Oberwellenmotor skizzenhaft wiedergegeben. Vorteilhaft ist ein Statoraufbau mit abwechselnd breiten Zähnen 50 und schmalen Zähnen 51, wobei nur jeder breite Zahn 50 mit einer Wicklung 52 umwickelt wird. Die Zahnteilungsbreite τ_{zb} des breiten Zahns 50 lässt sich im Verhältnis zur Polteilungsbreite τₚ der Rotorpole angeben mit: τ_{zb} > 2,5τₚ. Diesbezüglich sei auf die Offenlegungsschrift 101 33 654 A1 des vorliegenden Anmelders verwiesen.

In FIG **5** ist als Beispiel ein 28-poliger Rotor, der 28 Einzelmagnete 53 aufweist, mit einem Stator gezeigt, der sechs breite Zähne 50 und sechs schmale Zähne 51 hat. Der Stator erzeugt als Grundpolzahl 2p_{G} = 4. Der Motor arbeitet somit mit der siebten Oberwelle des Luftspaltfelds. Für das Teilungsverhältnis τ_{zb}/τₚ gilt im Beispiel: τ_{zb}/τ_{zb} ≈ 3.

Die oben genannten Rollenmotoren können derart betrieben werden, dass keine separaten Rotorlagegeber notwendig sind. Ein mögliches Verfahren hierzu nutzt die EMK des Motors, um die Rotorlage zu detektieren und die Motorphasen entsprechend zu bestromen. Der Aufbau ohne Rotorlagegeber bietet deutliche Vorteile für eine einfache Motorkonstruktion und einfache Fertigungstechnik.

Die oben beschriebenen Rollenmotoren können durchaus sehr hohe Baulängen erreichen. Bei hohen Baulängen und extremer Nutfüllung ist jedoch ein axiales Einbringen eines Deckschiebers als Nutverschluss für den Stator sehr problematisch. Daher kann beispielsweise als Nutverschluss ein Rundmaterial in den Nutspalt radial eingebracht werden. Dazu sollte der Durchmesser des Rundmaterials gegenüber dem Nutspalt ein Übermaß besitzen, so dass es beim Einbringen zu einer Verpressung kommt, mit der die Wicklung in ihrer Lage gehalten werden kann. Ist dieses Rundmaterial in Form einer Papierschnur ausgebildet, so kann sie mit Harz getränkt und entsprechend in der Nut verklebt werden. In FIG **6** ist dieser Nutverschluss des Stators skizziert. Das Rundmaterial 54 ist in dem jeweiligen Nutspalt 55 angeordnet und verschließt damit die darunter liegende Nut, in der sich jeweils eine Wicklung 52 befindet.

Einsatzzwecke für die oben genannten Rollenmotoren sind Rollenbahnen in der Fördertechnik von Post- und Paketverteilerzentren, Sicherheits- und Verzögerungselemente (Bahnsteuerung) in Textil- und Papierveredelungsanlagen sowie bei Textilspindeln und Galetten.

## Patentansprüche

1. Rollenmotor mit
- einem Außenläufer, der eine Vielzahl von Einzelmagneten (5) aufweist, die am Innenumfang eines Rückschlussrohrs (7) angeordnet sind,
- eine Trägereinrichtung (1), die zumindest teilweise radial innerhalb der Einzelmagnete (5) angeordnet ist und die radial nach außen weisende, axial verlaufende Abstandshalter (2) zum Beabstanden der Einzelmagnete (5) in Umfangsrichtung aufweist,
**dadurch gekennzeichnet,**
**dass** die Trägereinrichtung (1) radial innen ausgedreht ist, so dass bei im Querschnitt rechteckigen Einzelmagneten (5) in Umfangsrichtung erstreckende Restträgerabschnitte (8) radial unterhalb der Abstandshalter (2) bestehen.

2. Rollenmotor nach Anspruch 1, wobei ein Pol mit mehreren Einzelmagneten (5) realisiert ist.

3. Rollenmotor nach Anspruch 1 oder 2, wobei die Trägereinrichtung (1) im Wesentlichen ein Rohr oder eine Hülse bildet.

4. Rollenmotor nach einem der vorhergehenden Ansprüche, wobei die Trägereinrichtung (1) aus Kunststoff besteht.

5. Rollenmotor nach einem der vorhergehenden Ansprüche, wobei die Trägereinrichtung (1) Klebebetten (4) besitzt, in denen Klebstoff (6) die Einzelmagnete (5) an die Trägereinrichtung (1) fixiert.

6. Rollenmotor nach einem der vorhergehenden Ansprüche, wobei Rohrabschnitte der Trägereinrichtung (1) unterschiedliche Wandstärken besitzen.

7. Verfahren zum Herstellen eines Rollenmotors oder Außenläufermotors durch
- Bereitstellen einer rohrförmigen Trägereinrichtung (1) mit radial nach außen weisenden, axial verlaufenden Abstandshaltern (2),
- Fixieren einer Vielzahl von Einzelmagneten (5) oder Magnetrohlingen am Außenumfang der Trägereinrichtung (1), jeweils einen Einzelmagneten (5) oder Magnetrohling zwischen zwei Abstandshaltern (2),
- Einschieben und Fixieren der Trägereinrichtung (1) mit den Einzelmagneten (5) oder Magnetrohlingen in einem Rückschlussrohr (7),
**dadurch gekennzeichnet,**
**dass** die Trägereinrichtung (1) ausgedreht wird, so dass im Wesentlichen nur die Abstandshalter (2) zwischen den Einzelmagneten (5) oder Magnetrohlingen bestehen bleiben.

8. Verfahren nach Anspruch 7, wobei ein Magnetisieren der Magnetrohlinge nach dem Fixieren in dem Rückschlussrohr (7) stattfindet.

9. Verfahren nach einem der Ansprüche **7 oder 8**, wobei die Trägereinrichtung (1) durch einen Spreizdorn an das Rückschlussrohr (7) angepresst wird.

## Claims

1. Roller motor with
- an external rotor featuring a plurality of individual magnets (5) which are arranged on the inner circumference of the flux return tube (7),
- a support unit (1) arranged at least partly radially inside the individual magnets (5) and including outwardly oriented, axially extending spacers (2) for spacing the individual magnets (5) in the circumferential direction,
**characterized in that**
the support unit (1) is turned out radially on the inside, so that for the individual magnets (5) rectangular in cross section there are residual support sections (8) extending radially in the circumferential direction below the spacers (2).

2. Roller motor according to claim 1, with a pole being implemented with a number of individual magnets (5).

3. Roller motor according to claim 1 or 2, with the support unit (1) essentially forming a tube or a sleeve.

4. Roller motor according to one of the previous claims, with the support unit (1) consisting of plastic.

5. Roller motor according to one of the previous claims, with the support unit (1) having beds of adhesive (4) in which adhesive (6) fixes the individual magnets (5) to the support unit (1).

6. Roller motor according to one of the previous claims, with tube sections of the support unit (1) having different wall thicknesses.

7. Method for manufacturing a roller motor or external rotor motor by
- providing a tubular support unit (1) with radially outwards pointing, axially extending spacers (2),
- fixing a plurality of individual magnets (5) or magnet blanks to the outer circumference of the support unit (1), with one individual magnet (5) or magnet blank between each two support units (2),
- inserting and fixing the support unit (1) with the individual magnets (5) or magnet blanks in a flux return tube (7),
**characterized in that**
the support unit (1) is turned outwards so that essentially only the spacers (2) are left in place between the individual magnets (5) or magnet blanks.

8. Method according to claim 7, with the magnet blanks being magnetized after being fixed in the flux return tube (7).

9. Method according to one of claims 7 or 8, with the support unit (1) being pressed against the flux return tube (7) with an expansion arbour.

## Revendications

1. Moteur pour rouleaux comprenant
- un rotor extérieur, qui a une pluralité d'aimants (5) individuels disposés à la périphérie intérieure d'un tube de retour (7),
- un dispositif de support (1) qui est disposé au moins en partie radialement à l'intérieur des aimants (5) individuels et qui a des entretoises d'espacement (2) dirigées radialement vers l'extérieur et s'étendant axialement, pour assurer l'espacement des aimants (5) individuels dans la direction périphérique,
**caractérisé en ce que**
le dispositif de support (1) est détouré radialement à l'intérieur, de sorte que, pour des aimants (5) individuels rectangulaires en section transversale, des tronçons de support résiduels (8) s'étendant dans la direction périphérique, sont formés radialement sous les entretoises d' espacement (2).

2. Moteur pour rouleaux selon la revendication 1, dans lequel un pôle est réalisé par plusieurs aimants (5) individuels.

3. Moteur pour rouleaux selon la revendication 1 ou 2, dans lequel le dispositif de support (1) forme essentiellement un tube ou une douille.

4. Moteur pour rouleaux selon l'une des revendications précédentes, dans lequel le dispositif de support (1) est réalisé en matière plastique.

5. Moteur pour rouleaux selon l'une des revendications précédentes, dans lequel le dispositif de support (1) comporte des cavités ou lits de collage (4) dans lesquels de la colle (6) fixe les aimants (5) individuels au dispositif de support (1).

6. Moteur pour rouleaux selon l'une des revendications précédentes, dans lequel des tronçons de tube du dispositif de support (1) possèdent des épaisseurs de paroi différentes.

7. Procédé de fabrication d'un moteur pour rouleaux ou moteur à rotor extérieur, par les étapes suivantes :
- mise à disposition d'un dispositif de support (1) de forme tubulaire, comportant des entretoises d'espacement (2) dirigées radialement vers l'extérieur et s'étendant axialement,
- fixation d'une pluralité d'aimants (5) individuels ou d'ébauches d'aimant à la périphérie extérieure du dispositif de support (1), à savoir à chaque fois un aimant (5) individuel ou une ébauche d'aimant entre deux entretoises d'espacement (2),
- insertion et fixation du dispositif de support (1) avec les aimants (5) individuels ou les ébauches d'aimant, dans un tube de retour (7),
**caractérisé en ce que**
le dispositif de support (1) est détouré de manière à ce qu'il ne reste essentiellement que les entretoises d'espacement (2) entre les aimants (5) individuels ou les ébauches d'aimant.

8. Procédé selon la revendication 7, d'après lequel une magnétisation des ébauches d'aimant est effectuée après la fixation dans le tube de retour (7).

9. Procédé selon l'une des revendications 7 ou 8, d'après lequel le dispositif de support (1) est pressé contre le tube de retour (7) par un mandrin d'expansion.
